# EUROPÄISCHE PATENTSCHRIFT

(11) **EP 1 045 140 B1**
(45) Veröffentlichungstag und Bekanntmachung des Hinweises auf die Patenterteilung: **22.09.2004**
(21) Anmeldenummer: 00107377.4
(22) Anmeldetag: 05.04.2000
(51) Int. Cl.: F03D 11/02

(54) **Getriebe für eine Windkraftanlage**
Gear box for a wind turbine
Boîte de vitesses pour éolienne

(30) Priorität: 12.04.1999 DE 19916454
(43) Veröffentlichungstag der Anmeldung: 18.10.2000
(73) Patentinhaber: Winergy AG, 46562 Voerde (DE)
(72) Erfinder: Schoo, Alfred, Dr., 46397 Bocholt (DE)
(74) Vertreter: Radünz, Ingo, Dipl.-Ing.

(56) Entgegenhaltungen:
- WO-A-96/11338
- DE-A- 3 625 840
- DE-A- 3 714 859
- US-A- 4 871 923
- THORNBLAD P: "GEARS FOR WIND POWER PLANTS" INTERNATIONAL SYMPOSIUM ON WIND ENERGY SYSTEMS, XX, XX, 1978, Seiten C689-C6106, XP002133564

## Beschreibung

Die Erfindung betrifft ein Getriebe für eine Windkraftanlage mit den Merkmalen des Oberbegriffes des Patentanspruches 1.

Moderne Windkraftanlagen werden immer stärker von ökologischen und ökonomischen Zwängen beeinflußt. Die Ökonomie verlangt, daß moderne Windkraftanlagen mit herkömmlicher Energiegewinnung, z. B. durch fossile Kraftwerke oder Nuklearkraftwerke konkurrieren können. Das setzt Hochleistungsanlagen mit geringem Leistungsgewicht in kompakter Bauform voraus. Aus Belastungs- und Umweltgründen (Geräuschemission) sind die dynamischen Belastungen zu reduzieren. Die Aufstellungsorte sollten möglichst kontinuierliche und starke Windverhältnisse garantieren und dünn besiedelt sein. Eine Alternative bieten Offshore-Anlagen, die wiederum aufgrund der hohen Installationsaufwendungen noch leistungsfähigere, kompaktere und leichtere Anlagen verlangen.

Der Antriebsstrang bekannter Windkraftanlagen (EP-OS 635 639) setzt sich zusammen aus dem Rotorblättern mit der Rotornabe, der Rotorwelle mit der Rotorlagerung, einem mehrstufigen Planeten-Stirnradgetriebe, einer Kupplung und einem Generator. Die Rotorblätter sind mit der Rotornabe verbunden und treiben die Rotorwelle an. Diese ist in einem großen Wälzlager aufgenommen, das über einen Maschinenrahmen mit dem Azimutlager verbunden ist. Auf diese Weise werden die am Rotor angreifenden Windkräfte in den Turm eingeleitet. Diese Lagerung erfordert einen Wellenabschnitt zwischen dem Rotor und dem Getriebe. Das zweite Rotorwellenlager wird von dem Getriebe gebildet, dessen Antriebshohlwelle über eine Schrumpfscheibe mit der Rotorwelle verbunden ist. Das Getriebe stützt sich über eine doppelarmige Drehmomentstütze ebenfalls an dem Maschinenrahmen ab. Diese bekannte Windkraftlanlage beansprucht verhältnismäßig viel Raum und ist dadurch in der Leistungsfähigkeit beschränkt.

Aus der EP-OS 811 764 ist eine Windkraftanlage bekannt, bei der der Rotor direkt an dem Planetenträger eines einstufigen Planetengetriebes angebaut ist. Dieses Getriebe und der Generator sind an einem gemeinsamen Maschinenrahmen montiert.

In der WO 96/11338 ist ein zweistufiges Planetengetriebe mit zwei einfach verzahnten Planetenstufen für eine Windkraftanlage beschrieben. Der Rotor ist direkt an dem Planetenträger angebaut und die Lagerung des Rotors erfolgt im Getriebegehäuse. Die weitere Anbindung des Getriebes an die Windkraftanlage ist nicht beschrieben.

In der Veröffentlichung "Gears for Wind Power Plants" in Second International Symposium on Wind Energy Systems 1978, Seiten C6-89 bis C6-106 ist ein dreistufiges Planetengetriebe für eine Windkraftanlage beschrieben. Alle Planetenstufen dieses Planetengetriebes sind gleichartig ausgeführt und mit einer Doppelverzahnung versehen. Die Planetenstufen sind koaxial hintereinander angeordnet, wodurch das Planetengetriebe verhältnismäßig groß baut.

Der Erfindung liegt die Aufgabe zugrunde, ein Konzept für eine Windkraftanlage zu entwickeln, das kompakter baut und damit für höhere Leistungen in einem Bereich von etwa 2,5 - 5 MW bei nur geringfügig schwerer und aufwendigerer Bauweise geeignet ist.

Die zugrundeliegende Aufgabe wird bei einem gattungsgemäßen Getriebe für eine Windkraftanlage erfindungsgemäß durch die kennzeichnenden Merkmale des Anspruches 1 gelöst. Vorteilhafte Ausgestaltungen der Erfindung sind Gegenstand der Unteransprüche.

Durch die direkte Verbindung der Rotornabe mit der Antriebsstufe des zweistufigen Planetengetriebes wird eine kompakte Bauweise erreicht. Eine besonders kompakte Bauweise wird möglich, wenn die Rotornabe mit dem Getriebegehäuse verbunden wird, weil in diesem Fall das gesamte Getriebe in der Rotornabe untergebracht werden kann. Durch die Doppelschrägverzahnung der Antriebsstufe und die schrägverzahnten Stufenplaneten der Abtriebsstufe sind auf kleinerem Raum höhere Übersetzungen zu erzielen. Bei dem erfindungsgemäßen Getriebe kann weiterhin auf einen Maschinenrahmen verzichtet und das Gehäuse des Getriebes oder des Generators direkt mit dem Azimutlager verbunden werden.

Zwei Ausführungsbeispiele der Erfindung sind in der Zeichnung dargestellt und werden im folgenden näher erläutert. Es zeigen:
Fig. 1 den Längsschnitt durch eine Windkraftanlage und
Fig. 2 den Längsschnitt durch eine andere Windkraftanlage.

Die dargestellte Windkraftanlage umfaßt einen Rotor 1 mit mehreren in einer Rotornabe 2 gehaltenen Rotorblättern 3. Der Rotor 1 ist über ein zweistufiges, aus Antriebsstufe 4 und Abtriebsstufe 5 bestehendes Planetengetriebe mit einem Generator 6 verbunden. Die Windkraftanlage ist über ein Azimutlager 7 auf einen Turm 27 aufgesetzt und wird mit Hilfe eines Azimutantriebes 8 dem Wind nachgeführt.

Die Antriebsstufe 4 des Planetengetriebes ist als doppelschrägverzahnte Planetenstufe ausführt und enthält je nach Belastung drei oder vier Planetenräder 9, die gleichmäßig am Umfang eines Planetenträgers 10 verteilt angeordnet sind. Die Lager 11 der Planetenräder 9 können wahlweise als Wälzlager oder als Gleitlager ausgebildet sein. Die Planetenräder 9 greifen in ein Hohlrad 12 und ein Sonnenrad 13 ein. Planetenräder 9, Hohlrad 12 und Sonnenrad 13 der Antriebsstufe 4 sind mit einer Doppelschrägverzahnung versehen.

Das Sonnenrad 13 der Antriebsstufe 4 ist mit dem Planetenträger 14 der Abtriebsstufe 5 verbunden. Diese Verbindung ist drehfest, aber längsbeweglich, um eine gleichmäßige Lastverteilung sicherzustellen. Damit auch die Abtriebsstufe 5 eine optimale Lastverteilung aufweist, ist hier der Planetenträger 14 einstellbeweglich gelagert und wird lediglich von den Verzahnungskräften gehalten.

In dem Planetenträger 14 der Abtriebsstufe 5 sind in Wälzoder Gleitlagern mehrere Planetenräder 15 gelagert. Um höhere Übersetzungen zu realisieren, sind diese Planetenräder 15 als Stufenplaneten ausgebildet, wobei eine Stufe mit dem Hohlrad 16 und die andere Stufe mit dem Sonnenrad 17 der Abtriebsstufe 5 in Eingriff steht.

Die Welle 18 des Sonnenrades 19 der Abtriebsstufe 5 bildet mit der Welle 19 des schnellaufenden Generators 6 eine Einheit. Alternativ ist es möglich, die Verzahnung für das Sonnenrad 17 direkt in die Welle 19 des Generators 6 einzuschneiden oder aber das Sonnenrad 17 als Steckritzel einzupressen.

Die Hohlräder 12, 16 der Antriebsstufe 4 und der Abtriebsstufe 5 bilden mit dem Getriebegehäuse 20 eine Einheit, wobei die Hohlräder 12, 16 eingeschraubt werden. Es ist aber auch möglich, die Hohlräder 12, 16 und das Getriebegehäuse 20 aus demselben Werkstück herzustellen.

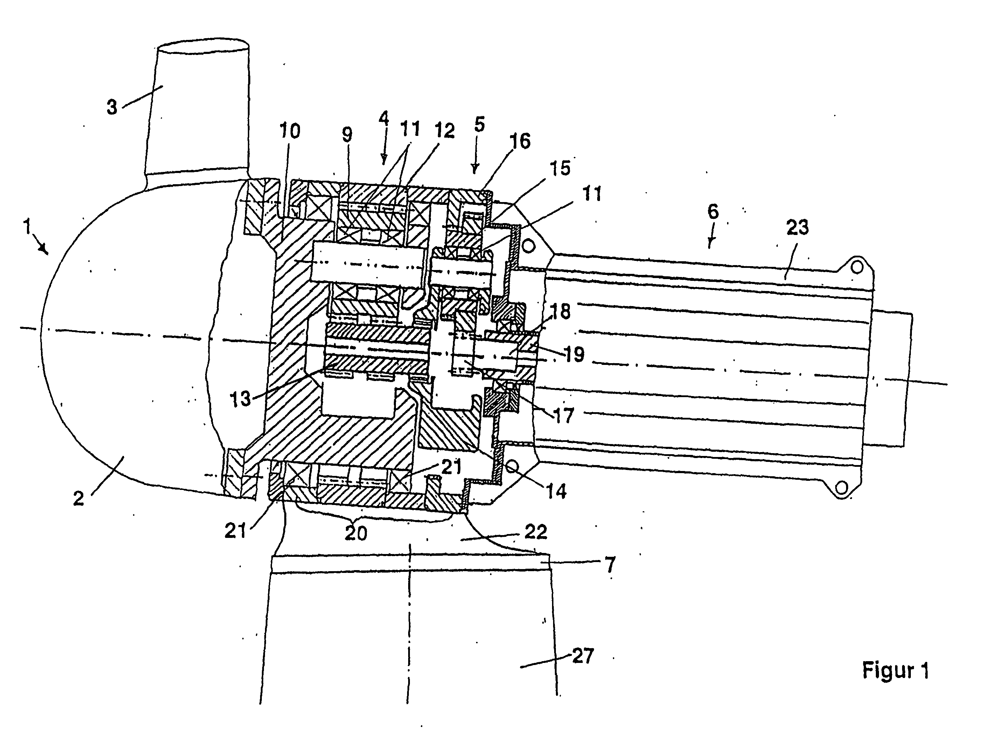

Gemäß Fig. 1 ist die Rotornabe 2 direkt mit dem Planetenträger 10 der Antriebsstufe 4, z. B. durch Verschrauben verbunden. Der Planetenträger 10 ist in zwei großen Wälzlagern 21, die gleichzeitig auch der Lagerung des Rotors 1 dienen, im Getriebegehäuse 20 fixiert. Der Planetenträger 10 überträgt somit die gesamten, an den Rotorblättern 3 angreifenden Windkräfte in das Getriebegehäuse 20. Das Getriebegehäuse 20 wiederum ist mit einem Fuß 22 so ausgebildet, daß es direkt am Azimutlager 7 angeschraubt werden und so die Kräfte in den Turm 27 überleiten kann. Das Gehäuse 23 des Generators 6 ist direkt an das Getriebegehäuse 20 angeflanscht.

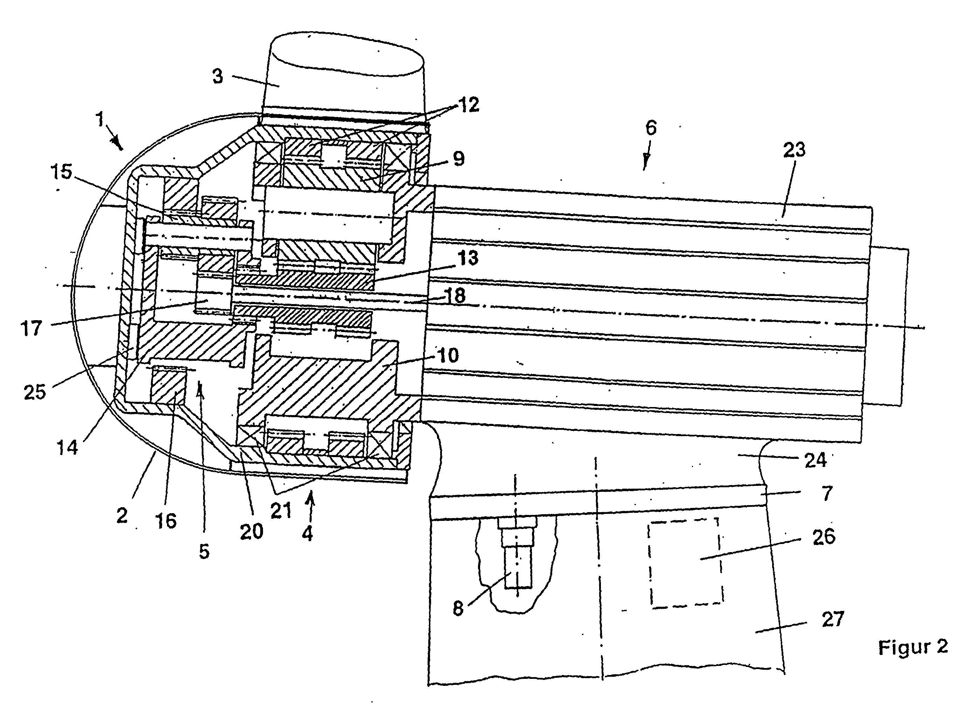

Gemäß Fig. 2 ist das Planetengetriebe komplett in der Rotornabe 2 plaziert. Das Getriebegehäuse 20 ist mit der Rotornabe 2 verbunden und nimmt somit die Antriebsdrehzahl auf. Sowohl die beiden Hohlräder 12 der doppelschrägverzahnten Antriebsstufe 4 als auch das einfachschrägverzahnte Hohlrad 16 der Abtriebsstufe 5 sind in dem sich drehenden Getriebegehäuse 20 plaziert und stellen die Koppelung dar. Die Antriebsstufe 4 ist als Standgetriebe ausgeführt, wobei deren Planetenträger 14 stillsteht und fest mit dem Gehäuse 23 des Generators 6 verbunden ist. Der Planetenträger 10 der Antriebsstufe 4 nimmt auch die beiden großen Wälzlager 21 auf, die das Getriebegehäuse 20 und damit auch die Rotornabe 2 tragen. Über diese beiden großen Wälzlager 21 werden die gesamten, an den Rotorblättern 3 angreifenden Windkräfte auf das Gehäuse 23 des Generators 6 übertragen. Das Gehäuse 23 des Generators 6 selbst ist wiederum mit einem Fuß 24 ausgebildet, der an das Azimutlager 7 angeschraubt wird, so daß die Kräfte direkt in den Turm 27 der Windkraftanlage eingeleitet werden können.

Um den Planetenträger 10 der Antriebsstufe 4 mit dem Gehäuse 23 des Generators 6 direkt verschrauben zu können, muß die Antriebsstufe 4 zwischen dem Generator 6 und der Abtriebsstufe 5 plaziert werden. Somit ist es auch erforderlich, die Welle 18 des Sonnenrades 17 der Abtriebsstufe 5 durch das Sonnenrad 13 der Antriebsstufe 4 zu führen.

Da bei dem Getriebe gemäß Fig. 2 das bei herkömmlichen Windkraftanlagen genutzte freie Wellenende zwischen Getriebe und Generator 6 zum Anbau einer Scheibenbremse nicht mehr verfügbar ist, wird eine naßlaufende Bremse 25 in dem Getriebegehäuse 20 installiert. Bei einer Betätigung der Bremse 25 blockiert der Planetenträger 14 der Abtriebsstufe 5 drehfest mit dem Getriebegehäuse 20.

Der Generator 6 kann aus Gründen höherer Leistung ölgekühlt sein, wobei vorteilhafterweise dieser Ölkreislauf mit dem Ölkreislauf des Getriebes verbunden wird. Um das Maschinengehäuse kompakt zu halten bzw. darauf komplett zu verzichten, werden die Aggregate wie Schmieranlage 26, Schaltschrank und Azimutantrieb 8, im oberen Bereich des Turmes 27 angeordnet.

## Patentansprüche

1. Getriebe für eine Windkraftanlage mit einem Rotor (1) und einem Generator (6), wobei das Getriebe als zweistufiges Planetengetriebe mit einer Antriebsstufe (4) und einer Abtriebsstufe (5) ausgebildet ist und die Antriebsstufe (4) des Planetengetriebes direkt mit dem Rotor (1) verbunden und mit einer Doppelschrägverzahnung versehen ist, **dadurch gekennzeichnet, daß** die Abtriebsstufe (5) mit schrägverzahnten Stufenplaneten ausgeführt ist, daß das Sonnenrad (13) der Antriebsstufe (4) drehfest und einstellbeweglich in dem Planetenträger (14) der Abtriebsstufe (5) gelagert ist und daß der Planetenträger (14) der Abtriebsstufe (5) einstellbeweglich aufgeführt und nur von den Verzahnungskräften gehalten ist.

2. Getriebe nach Anspruch 1, **dadurch gekennzeichnet, daß** der Planetenträger (10) der Antriebsstufe (4) in dem Getriebegehäuse (20) über zwei Großwälzlager (21) gelagert ist, die gleichzeitig der Lagerung der Rotors (1) dienen.

3. Getriebe nach Anspruch 1 oder 2, **dadurch gekennzeichnet, daß** das Sonnenrad (17) der Abtriebsstufe (5) direkt mit der Welle (19) des Generators (6) verbunden ist.

4. Getriebe nach einem der Ansprüche 1 bis 3, **dadurch gekennzeichnet, daß** der Planetenträger (10) der Antriebsstufe (4) mit der Rotornabe (2) verbunden ist.

5. Getriebe nach Anspruch 4, **dadurch gekennzeichnet, daß** das Getriebegehäuse (20) mit dem Gehäuse (23) des Generators (6) verbunden und mit einem Fuß (22) versehen ist.

6. Getriebe nach einem der Ansprüche 1 bis 3, **dadurch gekennzeichnet, daß** das Getriebegehäuse (20) mit der Rotornabe (2) verbunden ist.

7. Getriebe nach Anspruch 6, **dadurch gekennzeichnet, daß** die Welle (18) des Sonnenrades (17) der Abtriebsstufe (5) durch das Sonnenrad (13) der Antriebsstufe (4) hindurchgeführt ist.

8. Getriebe nach Anspruch 6 oder 7, **dadurch gekennzeichnet, daß** der Planetenträger (10) der Antriebsstufe (4) mit dem Gehäuse (23) des Generators (6) verbunden ist.

9. Getriebe nach einem der Ansprüche 6 bis 8, **dadurch gekennzeichnet, daß** eine Bremse (25) im Getriebegehäuse (20) angeordnet ist.

## Claims

1. A gear for a wind power plant with a rotor (1) and a generator (6), whereby the gear is designed as a two-stage planetary gear with a driving stage (4) and a driven stage (5) and the driving stage (4) of the planetary gear is connected directly to the rotor (1) and is provided with a double helical gearing, **characterised in that** the driven stage (5) is designed with helical gear stage planets, **in that** the sun wheel (13) of the driving stage (4) is mounted torsionally stabil and adjustably mobile with the planet carrier (14) of the driven stage (5) and **in that** the planet carrier (14) of the driven stage (5) is designed adjustably mobile and is held only by the gearing forces.

2. The gear as claimed in claim 1, **characterised in that** the planet carrier (10) of the driving stage (4) is mounted in the gear housing (20) via two rolling bearings (21), which at the same time act as support for the rotor (1).

3. The gear as claimed in claim 1 or 2, **characterised in that** the sun wheel (17) of the driven stage (5) is connected directly to the shaft (19) of the generator (6).

4. The gear as claimed in any one of claims 1 to 3, **characterised in that** the planet carrier (10) of the driving stage (4) is connected to the rotor hub (2) .

5. The gear as claimed in claim 4, **characterised in that** the gear housing (20) is connected to the housing (23) of the generator (6) and is provided with a foot (22).

6. The gear as claimed in any one of claims 1 to 3, **characterised in that** the gear housing (20) is connected to the rotor hub (2).

7. The gear as claimed in claim 5, **characterised in that** the shaft (18) of the sun wheel (17) of the driven stage (5) is guided through the sun wheel (13) of the driving stage (4).

8. The gear as claimed in claim 6 or 7, **characterised in that** the planet carrier (10) of the driving stage (4) is connected to the housing (23) of the generator (6).

9. The gear as claimed in any one of claims 6 to 8, **characterised in that** a brake (25) is arranged in the gear housing (20).

## Revendications

1. Transmission par engrenages pour éolienne, avec un rotor (1) et un générateur (6), dans lequel la transmission par engrenages est réalisée sous la forme d'une transmission parr engrenages planétaires à deux étages, avec un étage d'entraînement (4) et un étage mené (5), et dans lequel l'étage d'entraînement (4) de la transmission par engrenages planétaire est directement relié au rotor (1) et est muni d'une denture en chevron, **caractérisée en ce que** l'étage mené (5) est équipé de satellites à denture hélicoïdale, **en ce que** la roue solaire (13) de l'étage d'entraînement (4) est disposé de manière fixe en rotation et de manière ajustable dans le support planétaire (14) de l'étage mené (5), et **en ce que** le support planétaire (14) de l'étage mené (5) est construit de manière ajustable, et n'est maintenu seulement par les forces d'engrènement.

2. Transmission par engrenages selon la revendication 1, **caractérisée en ce que** le support planétaire (10) de l'étage d'entraînement (4) est monté à rotation dans le carter de la transmission par engrenages (20) par deux couronnes dentées (21), qui servent simultanément au montage du rotor (1).

3. Transmission par engrenages selon la revendication 1 ou 2, **caractérisée en ce que** la roue solaire (17) de l'étage mené (5) est directement reliée à l'axe (19) du générateur (6).

4. Transmission par engrenages selon l'une quelconque des revendications 1 à 3, **caractérisée en ce que** le support planétaire (10) de l'étage d'entraînement (4) est relié au moyeu (2) du rotor.

5. Transmission par engrenages selon la revendication 4, **caractérisée en ce que** le carter de la transmission par engrenages (20) est relié au carter (23) du générateur (6) et est muni d'un pied (22).

6. Transmission par engrenages selon l'une quelconque des revendications 1 à 3, **caractérisée en ce que** le carter de la transmission par engrenages (20) est relié au moyeu (2) du rotor.

7. Transmission par engrenages selon la revendication 6, **caractérisée en ce que** l'axe (18) de la roue solaire (17) de l'étage mené (5) traverse la roue solaire (13) de l'étage d'entraînement (4).

8. Transmission par engrenages selon la revendication 6 ou 7, **caractérisée en ce que** le support planétaire (10) de l'étage d'entraînement (4) est relié au carter (23) du générateur (6).

9. Transmission par engrenages selon l'une quelconque des revendications 6 à 8, **caractérisée en ce qu'**un frein (25) est disposé dans le carter de la transmission par engrenages (20).
